# EUROPEAN PATENT SPECIFICATION

(11) **EP 1 879 115 B1**
(45) Date of publication and mention of the grant of the patent: **18.01.2012**
(21) Application number: 07252770.8
(22) Date of filing: 11.07.2007
(51) Int. Cl.: G06F 13/42, G06F 13/40

(54) **Information processing apparatus and data communication device**
Vorrichtung zur Informationsverarbeitung und Datenkommunikationsgerät
Appareil de traitement d'informations et dispositif de communication de données

(30) Priority: 11.07.2006 JP 2006190721
(43) Date of publication of application: 16.01.2008
(73) Proprietor: Ricoh Company, Ltd., Tokyo 143-8555 (JP)
(72) Inventor: Oshikiri, Koji, c/o Ricoh Co. Ltd., Tokyo 143-8555 (JP); Takeo, Koji, c/o Ricoh Co. Ltd., Tokyo 143-8555 (JP); Ikeda, Junichi, c/o Ricoh Co. Ltd., Tokyo 143-8555 (JP); Terao, Noriyuki, c/o Ricoh Co. Ltd., Tokyo 143-8555 (JP)
(74) Representative: Mounteney, Simon James

(56) References cited:
- US-A1- 2003 219 034
- US-A1- 2004 210 782
- JACK REGULA, CTO, PLX TECHNOLOGY: "PCI Express Technology Opens Host Bottleneck in Embedded Systems" COTS JOURNAL, [Online] October 2003 (2003-10), XP002454223 Retrieved from the Internet: URL:http://www.cotsjournalonline.com/pdfs/ 2003/10/cots10_specialfeature2.pdf> [retrieved on 2007-10-08]
- WWW.VMETRO.COM: "Getting Started with the Vanguard Express PCIe Protocol & Link Analyzer" VMETRO, [Online] March 2006 (2006-03), XP002454130 Retrieved from the Internet: URL:http://www.vmetro.com/getfile.php/whit epapers/analyzers/Getting-Started-VG-Expre ss.pdf> [retrieved on 2007-10-07]

## Description

### BACKGROUND OF THE INVENTION

### 1. Field of the Invention

The present invention relates to information processing apparatuses, such as digital copiers and multifunction products (MFPs) handling image data and other data, and data communication devices.

### 2. Description of the Related Art

In general, in information processing apparatuses that handle image data and other data, such as digital copiers and MFPs, a parallel-type bus typified by, for example, peripheral component interconnect (PCI) bus, is used as an interface between devices. However, the parallel-type bus has a small latency, and therefore it is impossible to construct a mechanism of dynamically optimizing a packet size or buffer size. To get around this problem, in place of a parallel-type interface such as a PCI bus, a high-speed serial interface such as Institute of Electrical and Electronics Engineers (IEEE) 1394 or universal serial bus (USB) has been considered for use as a means to achieve a further increase in speed and efficiency of an image bus. For example, according to Japanese Patent Application Laid-Open No. 2001-016382, the use of a high-speed serial interface such as IEEE 1394 or USB is suggested for use as an internal interface.

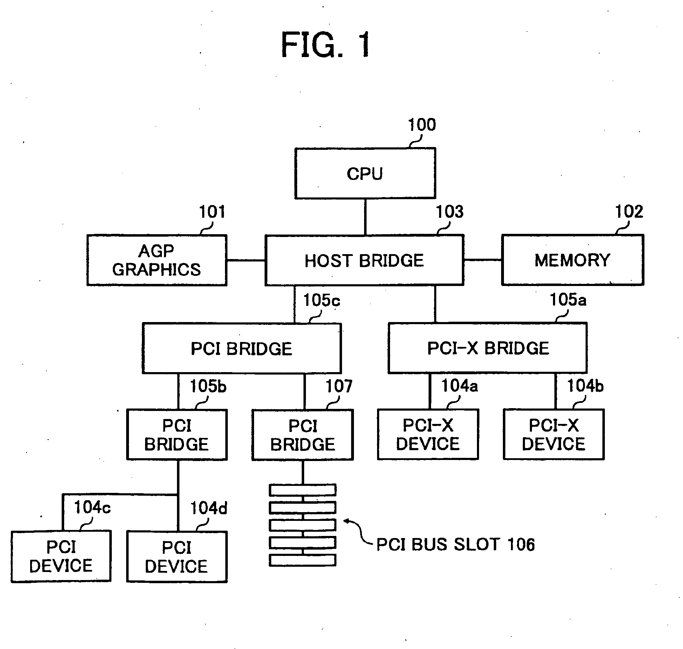

Another high-speed serial interface suggested is PCI Express (registered trademark), which is a succeeding version of the PCI bus standard and is now at the stage of actual use (for example, refer to "Outline of the PCI Express Standard", Takashi Satomi, Interface, July 2003). Briefly, this PCI Express system is configured as a data communication network with a tree structure, such as a root complex switch (arbitrary layer) device as depicted in Fig. 1 in "Outline of the PCI Express Standard", Takashi Satomi, Interface, July 2003.

However, in transmission with a high-speed serial interface such as an MFP, when a plurality of traffics occur, there is a problem of the occurrence of internal complicated conflicts. Since this conflict state changes according to the operation mode, it is difficult to support all conditions with certain settings.

US-A-2003219034 discloses a method of optimizing a radio link comprising acquiring at least OSI layer one and two performance measurements, determining an optimum setting collection for at least OSI layer three to a top layer, then configuring at least the OSI layer three to the top layer based upon the optimum setting collection.

US-A-2004210782 discloses an apparatus for adjusting system performance of computer fabricated on a motherboard. The apparatus comprises a plurality of performance monitor means and a performance control chip. The performance monitor means are connected separately to bus lines which are applied to connect devices mounted on the motherboard, for monitoring the operating state of each device according to the flow rate of data transferred in the bus lines. The performance control chip is connected separately to the devices, for adjusting the operating rate of the devices responsive to the performance monitor means. The performance control chip is capable of ascertaining the operating rate of each device is busy or not, so as to increase or decrease the operating rate of the device.

### SUMMARY OF THE INVENTION

It is an object of the present invention to at least partially solve the problems in the conventional technology.

According to one aspect of the present invention there is provided an information processing apparatus comprising a first data communication device and a second data communication device interconnectable with the first data communication device via a serial bus, wherein the first data communication device includes : a transfer-rate measuring unit that measures a transfer rate of at least one of a plurality of traffics including a first traffic from the first data communication device to the second data communication device and a second traffic from the second data communication device to the first data communication device; and a parameter adjusting unit that adjusts a payload size of data transferred over the first traffic based on a transfer-rate of the second traffic measured by the transfer-rate measuring unit such that the transfer rate of the first traffic becomes a first preset target value , or adjusts a payload size of data transferred over the second traffic based on a transfer-rate of the first t=affic measured by the transfer-rate measuring unit (34) such that the transfer rate of the second traffic becomes a second preset target value.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a configuration example of an existing PCI system;
Fig. 2 is a block diagram of a configuration example of a PCI Express system;
Fig. 3 is a block diagram of a configuration example of a PCI Express platform at a desktop/mobile computer;
Fig. 4 is a schematic drawing of a configuration example of a physical layer in the case of x4;
Fig. 5 is a schematic drawing of an example of a lane connection between devices;
Fig. 6 is a block diagram of a logical configuration example of a switch;
Fig. 7A is a block diagram of architecture of the existing PCI;
Fig. 7B is a block diagram of architecture of a PCI Express;
Fig. 8 is a block diagram of a hierarchical configuration of the PCI Express;
Fig. 9 is a drawing for explaining a format example of a transaction layer packet;
Fig. 10 is a drawing for explaining a configuration space of the PCI Express;
Fig. 11 is a schematic drawing for explaining a concept of a virtual channel;
Fig. 12 is a drawing for explaining a format example of a data link layer packet;
Fig. 13 is a schematic drawing of an example of byte striping on x4 link;
Fig. 14 is a drawing for explaining definitions of a link state of L0/L0s/L1/L2;
Fig. 15 is a time chart of an example of control over active-state power source management;
Fig. 16 is a block diagram depicting the outline of a data communication device according to a first embodiment of the present invention;
Fig. 17 is a block diagram of a configuration of a transfer-rate measuring circuit;
Fig. 18 is a schematic drawing that depicts a state where a traffic 1 of memory write occurs from a device A to a device B and a traffic 2 of memory write occurs from the device B to the device A;
Fig. 19 is a graph depicting an example of characteristics in the case depicted in Fig. 18;
Fig. 20 is a schematic drawing of a table of payload conditions of the traffic 1;
Fig. 21 is a block diagram depicting the outline of a data communication device according to a second embodiment of the present invention;
Fig. 22 is a block diagram depicting the outline of a data communication device according to a third embodiment of the present invention;
Fig. 23 is a schematic drawing of a configuration and operation of a buffer-size control circuit;
Fig. 24 is a schematic drawing of one example where the transfer rate of a traffic is degraded;
Fig. 25 is a schematic drawing of another example where the transfer rate of a traffic is degraded;
Fig. 26 is a graph depicting one example of characteristics in the case depicted in Fig. 24; and
Fig. 27 is a schematic drawing of a transfer-rate/buffer-size conversion table.

### DETAILED DESCRIPTION OF THE PREFERRED EMBODIMENTS

Embodiments of an information processing apparatus and a data communication device according to the present invention are explained in detail below with reference to the accompanying drawings

A first embodiment of the present invention is explained based on Figs. 1 to 20.

The first embodiment employs a PCI Express (registered trademark), which is one type of high-speed serial bus. As a premise of the embodiments, the outlines of the PCI Express standard are explained by partially extracting from "Outline of the PCI Express Standard", Takashi Satomi, Interface, July 2003. Here, the high-speed serial bus means an interface allowing data to be exchanged at high speed (equal to or higher than approximately 100 megabits per second) through serial transmission by using one transmission line.

The PCI Express bus is a bus standardized as a standard expansion bus for use in computers in general as a succeeding version of PCI. Briefly, the PCI Express bus has features, such as low-voltage differential signal transmission, a point-to-point communication channel with independent transmission and reception, packetized split transaction, and high scalability for different link configuration.

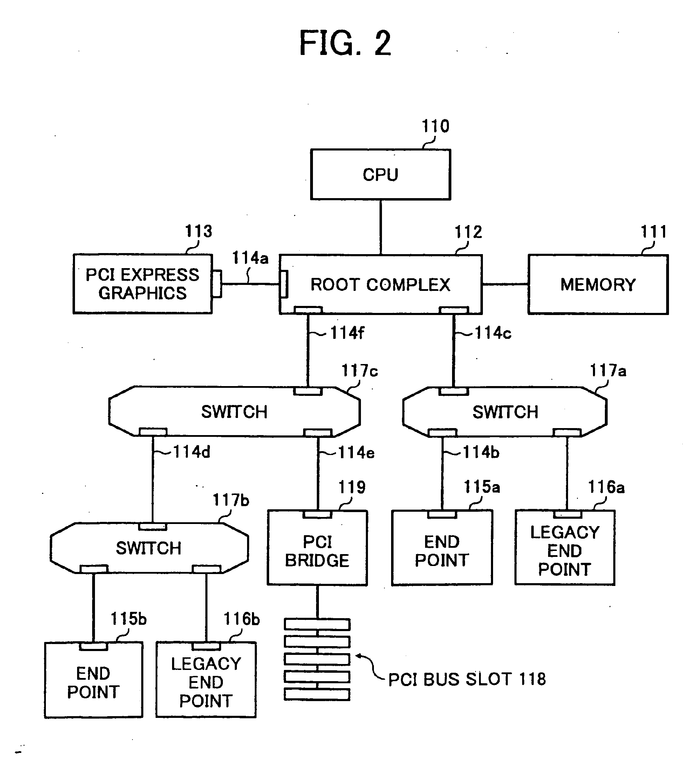

A configuration example of an existing PCI system is shown in Fig. 1, whilst a configuration example of a PCI Express system is shown in Fig. 2. In the existing PCI system, a central processing unit (CPU) 100, an accelerated graphics port (AGP) graphics 101, and a memory 102 are connected to a host bridge 103, to which PCI-X (a standard to which PCI is upwardly-compatible) devices 104a and 104b are connected through a PCI-X bridge 105a and to which a PCI bridge 105b having connected thereto PCI devices 104c and 104d and a PCI bridge 107 having connected thereto a PCI bus slot 106 are connected through a PCI bridge 105c, thereby forming a tree structure.

On the other hand, in the PCI Express system, a CPU 110 and a memory 111 are connected to a root complex 112, to which a PCI Express graphics 113 is connected through a PCI Express 114a and to which a switch 117a having connected thereto an end point 115a and a legacy end point 116a through a PCI Express 114b is connected through a PCI Express 114c. Also, a switch 117c is connected to the root complex 112 through a PCI Express 114f. The switch 117c has connected thereto a switch 117b through a PCI Express 114d and a PCI bridge 119 through a PCI Express 114e. The switch 117b has connected thereto an end point 115b and a legacy end point 116b, and the PCI bridge 119 has connected thereto a PCI bus slot 118. With this, a tree structure is formed.

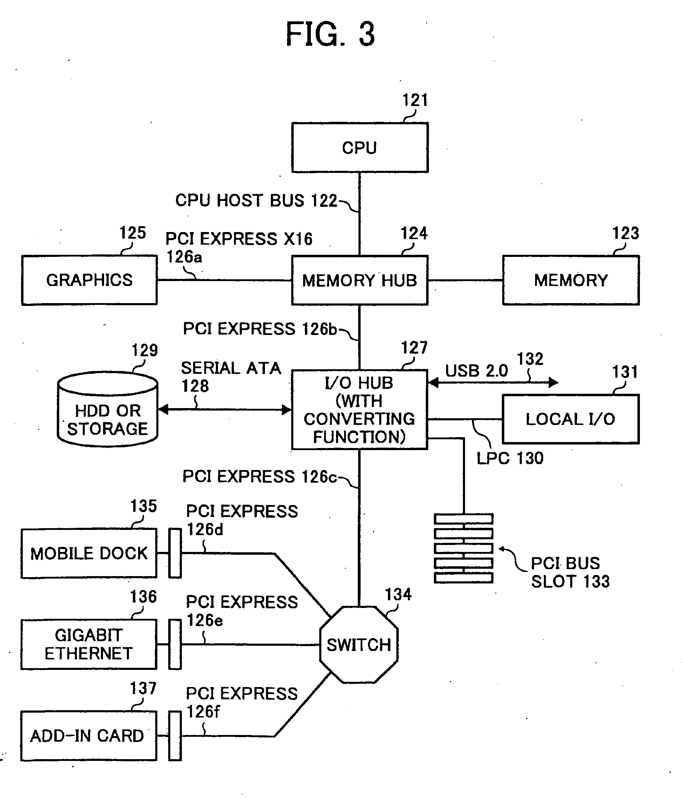

An example of a PCI Express platform that can be practically assumed is shown in Fig. 3, which is an example of application to a desktop/mobile computer. A CPU 121 is connected through a CPU host bus 122. A memory 123 is connected to a memory hub 124 (is equivalent to a root complex), to which a graphics 125 is connected through a PCI Express x16 126a and an Input/Output (I/O) hub 127 with a converting function is connected through a PCI Express 126b. To this I/O hub 127, for example, a storage 129 is connected through a Serial ATA 128, a local I/O 131 is connected through a low pin count (LPC) 130, and also USB 2.0 132 and a PCI bus slot 133 are connected. Furthermore, the I/O hub 127 has connected thereto a switch 134 through a PCI Express 126c. The switch 134 has connected thereto a mobile dock 135 through a PCI Express 126d, a gigabit Ethernet 136 (Ethernet is a registered trademark) through a PCI Express 126e, and an add-in card 137 through a PCI Express 126f.

That is, in the PCI Express system, conventional PCI, PCI-X, and AGP are replaced by PCI Express, and a bridge is used for connecting the existing PCI/PCI-X devices. A connection between chip sets is also replaced by a PCI Express connection, and the existing buses of IEEE 1394, Serial ATA, USB 2.0 and others are connected to PCI Express through an I/O hub.

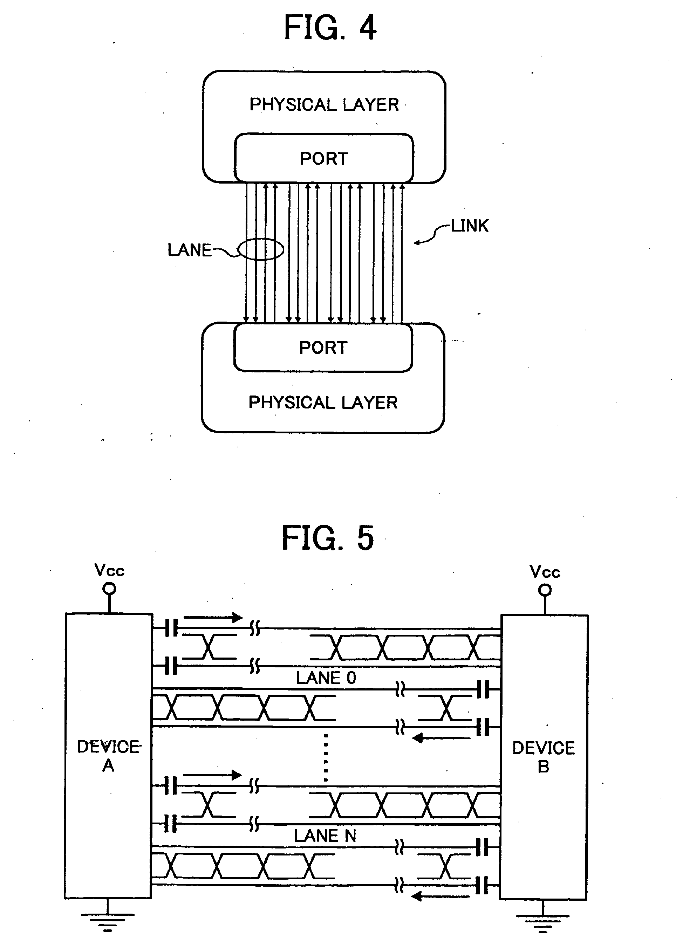

A configuration of a physical layer is shown in Fig. 4. A port is physically in the same semiconductor and is a collection of transmitters/receivers forming a link. Logically, the port means an interface for point-to-point connection between components and the link. The transfer rate is set as, for example, 2.5 gigabits per second in one direction. A lane is a set of pairs of differential signals with 0.8 volts, and is formed of a signal pair (two signals) on a transmission side and a signal pair (two signals) on a reception side. The link is a collection of lanes connecting between two ports and is a dual simplex communication bus between components. An "xN link" is configured of N lanes and, is defined as N=1, 2, 4, 8, 16, 32 in the current standard. The example is a case of x4 link. For example, as shown in Fig. 5, by varying a lane width N connecting devices A and B, it is possible to configure a scalable bandwidth.

The root complex 112 is positioned at the top of the I/O configuration, and connects the CPU and a memory subsystem to the I/O. In a block diagram, for example, as shown in Fig. 3, the root complex is often represented as a "memory hub". The root complex 112 (or 124) has one or more PCI Express ports (root ports) (in Fig. 2, represented as rectangles in the root complex 112), each port forming an independent I/O layer domain. The I/O layer domain may be a simple end point (for example, the one on the end point 115a side in Fig. 2), or may be formed of many switches and end points (for example, the one on the side of the end point 115b and the switches 117b and 117c in Fig. 2).

The end points 115 are devices having a configuration space header of type 00h (specifically, a device other than a bridge), and are divided into a legacy end point and a PCI Express end point. A significant difference between them is that the PCI Express end point is a Base Address Register (BAR) and does not require an I/O resource, and therefore does not make an I/O request. Neither does the PCI Express end point support a lock request.

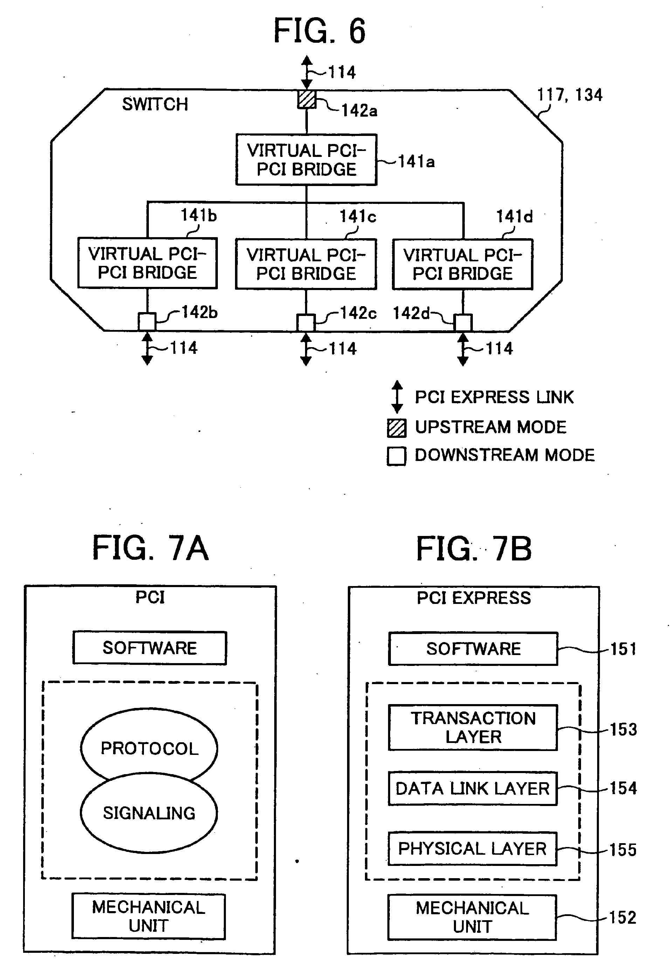

The switches 117 (or 134) connect two or more ports for packet routing among ports. From configuration software, as shown in Fig. 6, each switch is recognized as a collection of virtual PCI-PCI bridges 141. In the drawing, double-headed arrows represent PCI Express links 114 (or 126), and 142a to 142d represent ports. Of these, the port 142a is an upstream port near the root complex, whilst the ports 142b to 142d are downstream ports away from the root complex.

A connection from PCI Express to PCI/PCI-X is provided. With this, the existing PCI/PCI-X devices can be used on the PCI Express system.

The conventional PCI architecture has a structure in which a protocol and signaling are closely related to each other as shown in Fig. 7A, and the concept of hierarchy is not there. On the other hand, as with general communication protocols or InfiniBand, the PCI Express has an independent hierarchal structure as shown in Fig. 7B, and specifications are defined for each layer. That is, the structure is such that, between software 151 at the top layer and a mechanical unit 152 at the bottom layer, there are a transaction layer 153, a data link layer 154, and a physical layer 155. With such a structure, modulability of each layer is ensured, thereby allowing scalability and reuse of modules. For example, when a new signal coding scheme or transmission medium is adopted, in order to support this, all what is required is to change the physical layer, and neither the data link layer nor the transaction layer has to be changed.

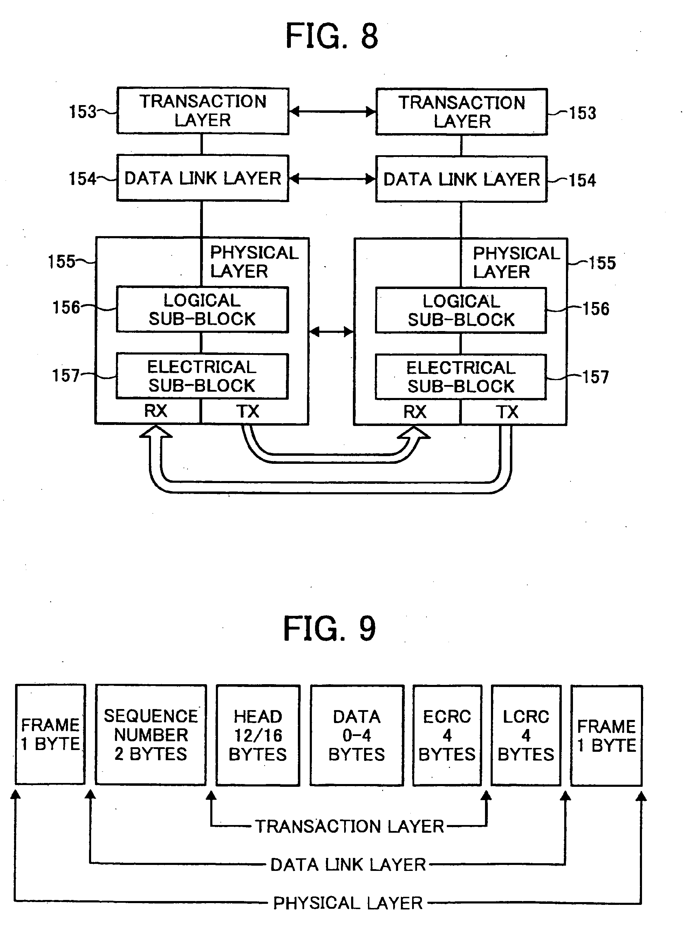

In the PCI Express architecture, the main components are the transaction layer 153, the data link layer 154, and the physical layer 155. Each of these layers functions as explained below with reference to Fig. 8.

The transaction layer 153 is positioned at the top, and has a function of assembling and disassembling a transaction layer packet (TLP). The transaction layer packet (TLP) is used for transmission of transactions, such as read/write and various events. Also, the transaction layer 153 performs flow control using a credit for the transaction layer packet (TLP). The outlines of the transaction layer packet (TLP) in each of the layers 153 to 155 are shown in Fig. 9 (details will be explained further below).

The main function of the data link layer 154 is to ensure data integrity of the transaction layer packet (TLP) through error detection/correction (retransmission) and perform link management. Between data link layers 154, a packet for link management and flow control is exchanged. Such a packet is called a data link layer packet so as to be differentiated from the transaction layer packet (TLP).

The physical layer 155 includes necessary circuits for interface operation, such as a driver, input buffer, parallel-serial/serial-parallel converter, Phase-Locked Loop (PLL), and impedance matching circuit. Also, as a logical function, the physical layer 155 has a function of initializing and maintaining the interface. Furthermore, the physical layer 155 has a function of making the data link layer 154/transaction layer 153 independent from signal technologies used in an actual link.

In the PCI Express hardware configuration, a technology called embedded clock is adopted. In this technology, no clock signal is present and clock timing is embedded in a data signal. Based on a cross point of the data signal on the reception side, a clock is extracted.

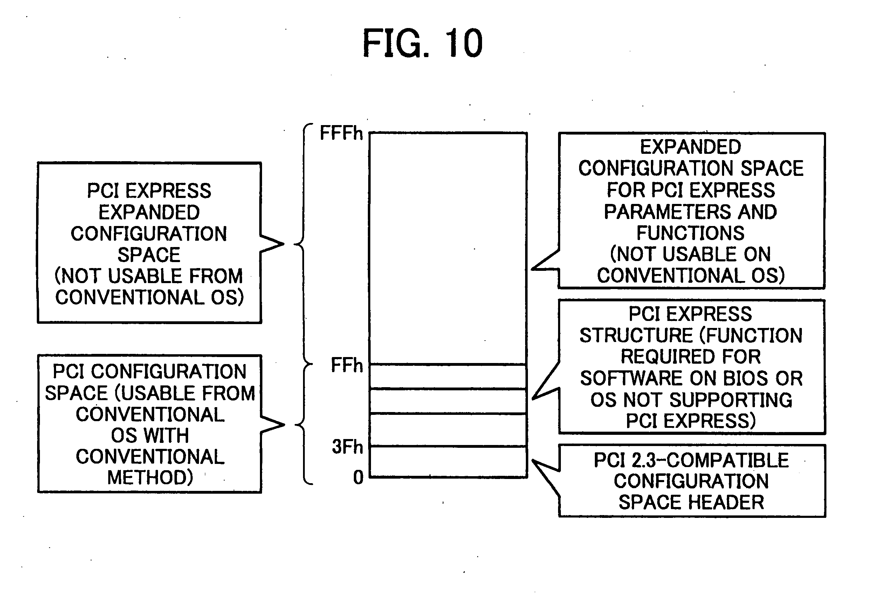

As with the conventional PCI, PCI Express has a configuration space. However, in contrast to the size of the configuration space in the convention PCI being 256 bytes, the size is expanded to 4096 bytes as shown in Fig. 10. With this, a sufficient space that may be required in future is ensured even for a device (such as a host bridge) requiring many device-specific register sets. In the PCI Express, access to the configuration space is performed through access to a flat memory space (configuration read/write), and the bus/device/function/register number are mapped to memory addresses.

This space has 256 bytes at the head, which can be accessed as a PCI configuration space even from a Basic Input Output System (BIOS) or the conventional Operating System (OS) through a scheme of using an I/O port. A function of converting the conventional access to PCI Express access is implemented on the host bridge. A PCI 2.3-compatible configuration header is formed by 00h to 3Fh. With this, the conventional OS and software can be used except for functions obtained through expansion in the PCI Express. That is, the software layer in the PCI Express has inherited a load store architecture compatible with the existing PCI (a scheme in which a processor directly accesses an I/O register). However, for using functions obtained through expansion in the PCI Express (for example, functions of synchronous transfer and Reliability, Availability and Serviceability (RAS)), it is required to access a PCI Express Expanded space of 4 kilobytes.

The PCI Express can take various form factors (shapes). Specific examples are an add-in card, a plug-in card (Express Card), and a Mini PCI Express.

The transaction layer 153, the data link layer 154, and the physical layer 155, which are main portions of the PCI Express architecture, are respectively explained.

The main function of the transaction layer 153 is, as explained above, to assemble and disassemble a transaction layer packet (TLP) between the upper software layer 151 and the lower data link layer 154.

In the PCI Express, in addition to a memory space (for data transfer with the memory space), a I/O space (for data transfer with the I/O space), and a configuration space (for device configuration and setup), a message space is added (for in-band event notification and general message transmission (exchange) between PCI Express devices, and an interrupt request or confirmation is transmitted by using a message as a "virtual wire"). Therefore, four address spaces are defined. For each space, a transaction type is defined (the memory space, the I/O space, and the configuration space is defined as read/write, whilst the message space is defined as basic (including vendor definition)).

In the PCI Express, communication is performed in a packet unit. In the format of the Transaction Layer Packet (TLP) shown in Fig. 9, the header length of the header is 3DW (DW is an abbreviation of double words and 3DW is 12 bytes) or 4DW (16 bytes). The header contains information, such as the format of the Transaction Layer Packet (TLP) (the header length and the presence or absence of a payload), the transaction type, a Traffic Class (TC), an attribute, and a payload length. The maximum payload length in a packet is 1024 DW (4096 bytes).

An end-to-end Cyclic Redundancy Check (ECRC) is to ensure end-to-end data integrity, and is 32 bits CRC in a part of the Transaction Layer Packet (TLP). ECRC is used because if an error occurs to the Transaction Layer Packet (TLP) inside the switch, the error cannot be detected through link CRC (LCRC) (because the LCRC is recalculated in the TLP where the error occurs).

Requests include a request that requires a complete packet and a request that does not require the complete packet.

Upper software can differentiate traffics by using traffic classes (TCs). For example, video data can be transferred with priority over network data. The traffic classes (TC) are classified into eight classes TCO to TC7.

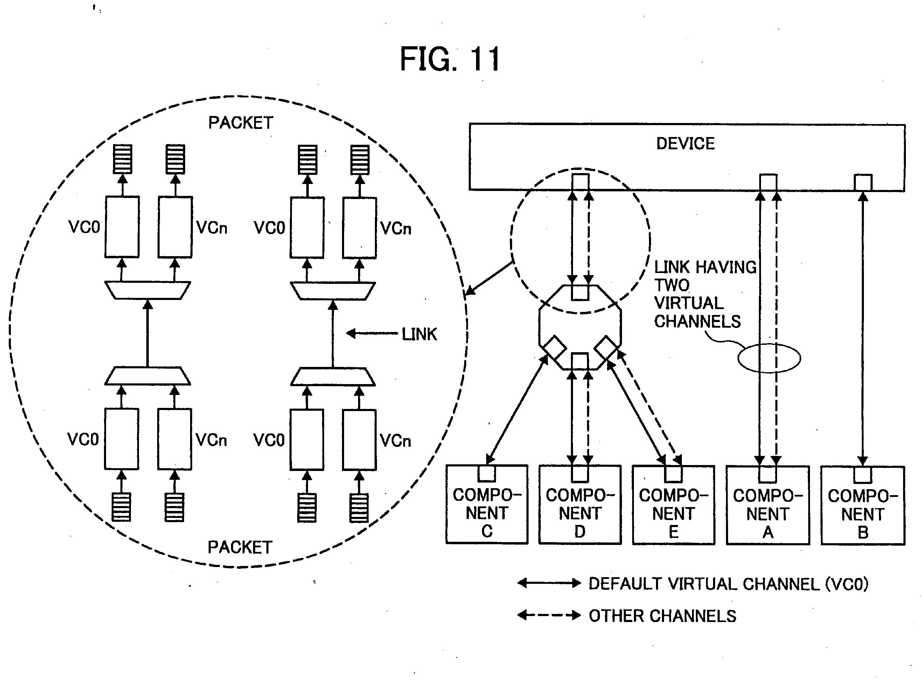

Virtual Channels (VCs) are virtual communication buses independent from one another (with a mechanism in which a plurality of independent data flow buffers sharing the same link are used) and each have a resource (a buffer and a queue). As shown in Fig. 11, the virtual channels each perform independent flow control. With this, even if a buffer of one virtual channel is full, a transfer with another virtual channel can be performed. That is, the physically single link can be effectively used by being divided into a plurality of virtual channels. For example, as shown in Fig. 11, when a root link is divided into links to a plurality of devices through a switch, priorities of traffics to the respective devices can be controlled. VC0 is indispensable, and other virtual channels (VC1 to VC7) are implemented according to a tradeoff between cost and performance. In Fig. 11, solid arrow lines represent default virtual channel (VC0) and broken arrow lines represent other virtual channels (VC1 to VC7).

In the transaction layer, the Traffic Classes (TCs) are mapped to the Virtual Channels (VCs). To one Virtual Channel (VC), one or plurality of Traffic Classes (TCs) can be mapped (when the number of Virtual Channels (VCs) is small). For example, in a simple case, a Traffic Class (TC) can be mapped to each Virtual Channel (VC) in a one-to-one relationship, and all Traffic Classes (TCs) can be mapped to the virtual channel VC0. TC0-VC0 mapping is indispensable/fixed, and other mapping is controlled by the upper software. By using the Traffic Classes (TCs), the software can control the priorities of transactions.

To avoid an overflow in a reception buffer and establish a transfer order, Flow Control (FC) is performed. The flow control is performed in a point-to-point manner between links, not end-to-end. Consequently, the flow control does not allow acknowledgement of a packet reaching a final destination (completer).

The flow control in the PCI Express is performed on a credit base (using a mechanism in which the empty state of a reception side buffer is confirmed before starting data transmission to avoid overflow and underflow). That is, the reception side notifies a transmission side of a buffer capacity (a credit value) at the time of initializing the link, and the transmission side then compares the credit value with the length of the packet to be transmitted and transmits the packet only when there is a certain remaining capacity. There are six types of credits.

Information exchange in flow control is performed by using a Data Link Layer Packet (DLLP) of the data link layer. The flow control is applied only to the Transaction Layer Packet (TLP) and is not applied to the Data Link Layer Packet (DLLP) (DLLP can always be transmitted and received).

The main function of the data link layer 154 is to provide a function of highly reliable Transaction Layer packet (TLP) exchange between two or more components on the link.

A Transaction Layer Packet (TLP) received from the transaction layer 153 is provided with a sequence number of 2 bytes at its head and an LCRC (link CRC) of 4 bytes at its tail, and is then passed to the physical layer 155 (refer to Fig. 9). The Transaction Layer Packet (TLP) is stored in a retry buffer and retransmitted to a destination until an acknowledgment (ACK) is received from the destination. When Transaction Layer Packets (TLPs) fail to be transmitted continuously, it is determined that the link is abnormal and the physical layer 155 is requested to perform retraining of the link. When training of the link fails, the state of the data link layer 154 is shifted to be inactive.

The sequence number and the Link CRC (LCRC) of the Transaction Layer Packet (TLP) received from the physical layer 155 are examined, and if they are normal, the TLP is sent to the transaction layer 153. If there is an error, retransmission is requested.

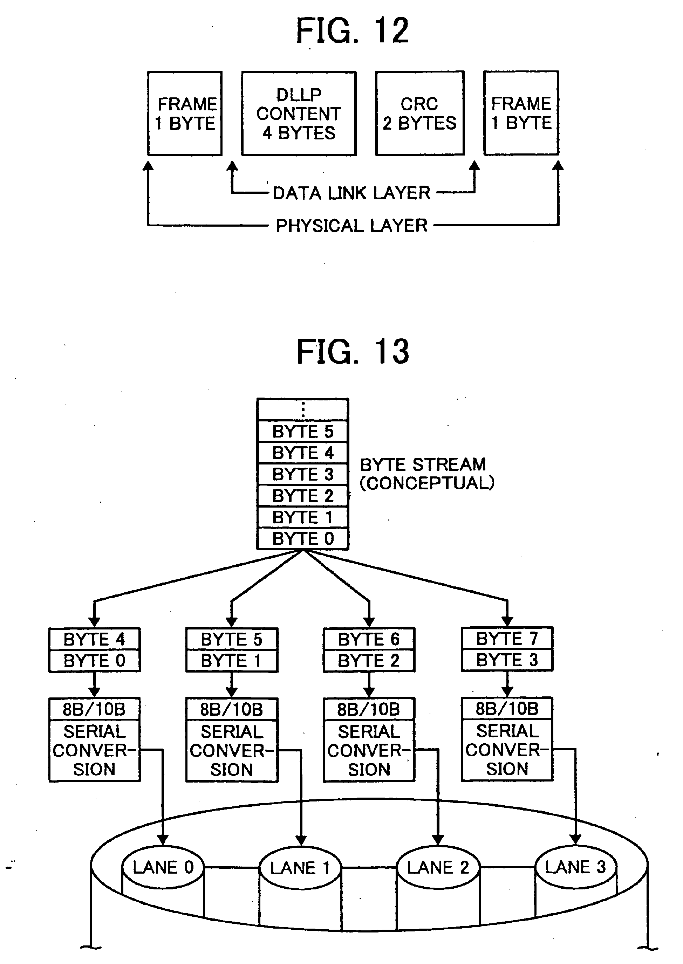

When transmitted from the physical layer, the Transaction Layer Packet (TLP) is automatically divided into Data Link Layer Packets (DLLPs) as shown in Fig. 12 for transmission to each lane. A packet generated by the data link layer 154 is called a Data Link Layer Packet (DLLP), and is exchanged between the data link layers 154. The Data Link Layer Packet (DLLP) includes Ack/Nak (reception confirmation and retry (retransmission) of TLP), InitFCl/InitFC2/UpdateFC (initialization and update of flow control), and DLLP for Power source management.

As shown in Fig. 12, the length of the Data Link Layer Packet (DLLP) is 6 bytes, and is composed of a DLLP type (1 byte) for indicating a type, information specific to the type of the DLLP (3 bytes), and CRC (2 bytes).

The main function of a logical sub-block 156 in the physical layer 155 shown in Fig. 8 is to convert a packet received from the data link layer 154 to a format that can be transmitted at an electrical sub-block 157. Also, the logical sub-block 156 has a function of controlling and managing the physical layer 155.

In the PCI Express, to avoid successive "0"s or "1"s (to avoid the state in which no cross point is present for a long time) 8B/10B conversion is used for data encoding. As shown in Fig. 13, serial conversion is applied to the converted data and is then transmitted from a least significant bit (LSB) onto a lane. Here, if a plurality of lanes are present (a x4 link is exemplified in Fig. 13), data is allocated to each lane in units of bytes before encoding. In this case, although this looks like a parallel bus at first sight, transferring is independently performed in each lane and, consequently, skewing being a problem in the parallel bus is greatly reduced.

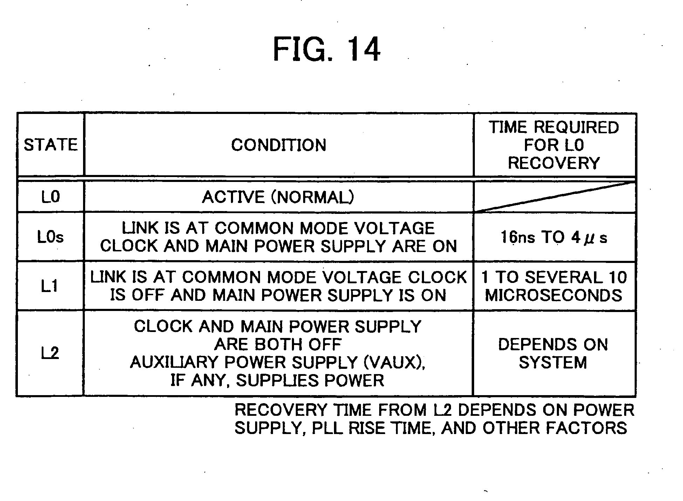

To suppress power consumption of links, as shown in Fig. 14, link states L0/L0s/L1/L2 are defined.

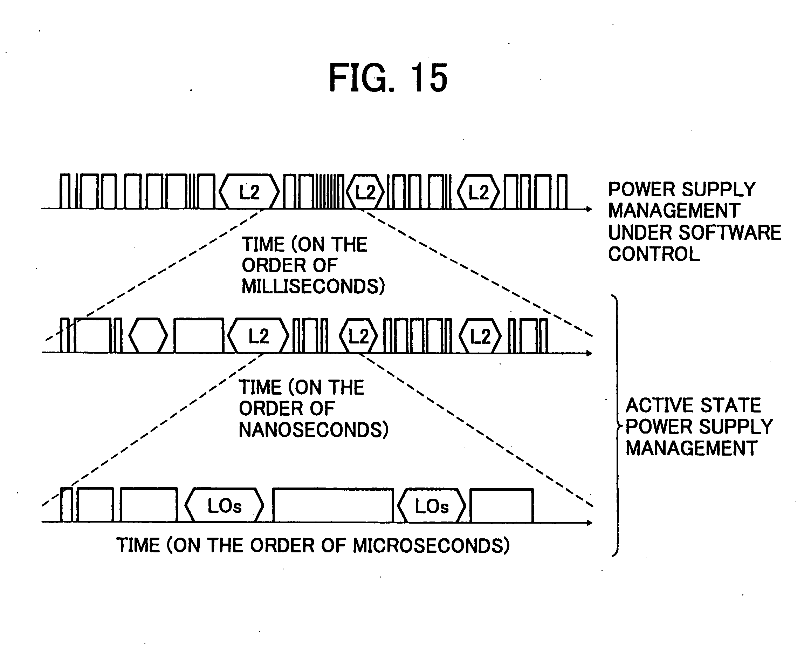

L0 is a normal mode and power consumption is more lowered from the L0s to L2, but time requiring for recovery to L0 becomes longer. As shown in Fig. 15, by actively performing active-state power source management in addition to power source management by software, power consumption can be minimized as much as possible.

The main function of the electrical sub-block 157 in the physical layer 155 is to transmit data serialized by the logical sub-block 156 onto a lane and to receive data from a lane for transfer to the logical sub-block 156.

A capacitor for AC coupling is mounted at the transmission side of the link. With this, it is not necessary that a DC common mode voltage be the same at the transmission side and the reception side. Therefore, different designs, different semiconductor processes, and different power supply voltages can be used between the transmission side and the reception side.

As explained above, in the PCI Express, the process is performed through 8B/10B encoding so as to avoid successive "0"s or "1"s as much as possible. However, there may be a case where successive "0"s or "1"s are present (at the maximum of five). In this case, it is stipulated that the transmission side execute de-emphasis transfer. When the same polarity bits continue, it is necessary that a noise margin of a signal received at the reception side be obtained by lowering the differential voltage level (amplitude) by 3.5±0.5 decibels from the second bit. This is called de-emphasis. For changing bits, with attenuation of frequency dependency on the transmission line, high frequency components are increased and the waveform at the reception side becomes small due to the attenuation. However, for unchanging bits, the high frequency components are decreased and the waveform at the reception side becomes relatively large. Therefore, de-emphasis is applied to make the waveform at the reception side constant.

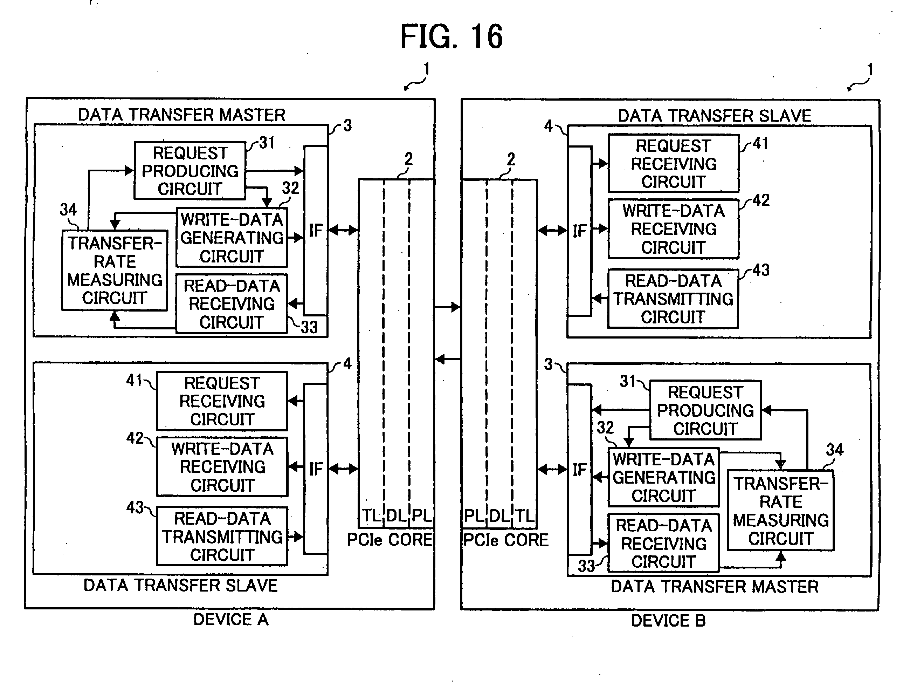

One example of a data communication device according to the present embodiment is explained with reference to Fig. 16. Fig. 16 is a block diagram depicting the outline of a data communication device 1 according to the first embodiment of the present invention.

As depicted in Fig. 16, the data communication devices 1 as a device A and a device B each connected through PCI Express connection each have a PCIe core 2 for PCI Express connection, a data transfer master 3, and a data transfer slave 4.

The PCIe core 2 includes, as explained with reference to Fig. 8, the transaction layer 153, the data link layer 154, and the physical layer 155, which are main components of the PCI Express architecture.

The data transfer master 3 includes a request producing circuit 31 as a parameter adjusting unit that sets a request issuing timing and adjusts a payload size, a write-data generating circuit 32 that generates write data according to an instruction from the request producing circuit 31, a read-data receiving circuit 33 that receives read data, and a transfer-rate measuring circuit 34 as a transfer-rate measuring unit that observes a data amount of the write-data generating circuit 32 and the read-data receiving circuit 33 to measure a transfer rate.

The data transfer slave 4 includes a request receiving circuit 41 that receives a request, a write-data receiving circuit 42 that receives write data, and a read-data transmitting circuit 43 that transmits read data.

A method of adjusting the payload size based on a memory write operation is explained. A command and data issued from the request producing circuit 31 and the write-data generating circuit 32 of the data transfer master 3 of the device A are transmitted to the PCIe core 2 of the device A. The PCIe core 2 of the device A performs data transfer with the PCIe core 2 of the device B through a PCI Express communication protocol. In the device B, the data received by the PCIe core 2 is transmitted to the data transfer slave 4, thereby completing transfer from the data transfer master 3 of the device A to the data transfer slave 4 of the device B. Data transfer from the device B to the device A is similarly performed.

Each data transfer master 3 observes the state of the write-data generating circuit 32 to measure the transfer rate of write data, and then transmits its information to the request producing circuit 31. The request producing circuit 31 adjusts the payload size based on the transfer rate information.

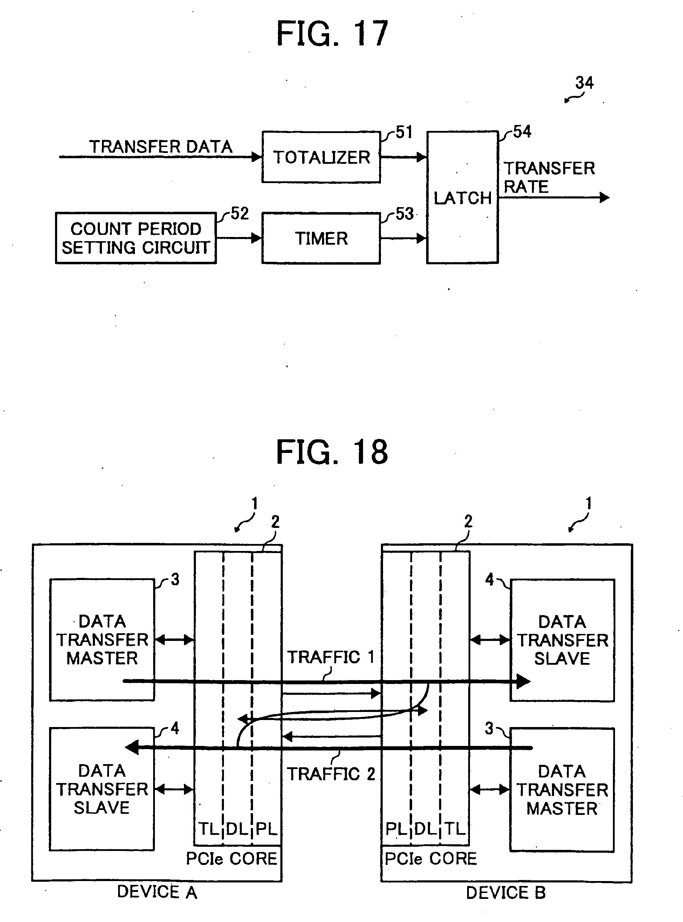

Measurement of the transfer rate by the transfer-rate measuring circuit 34 is explained below. Fig. 17 is a block diagram of the configuration of the transfer-rate measuring circuit 34. The transfer-rate measuring circuit 34 includes a totalizer 51 that observes transfer data and adds up effective data amounts, a count period setting circuit 52 that previously sets, from the CPU or the like, a time during which totalization is desired to be performed, a timer 53 that counts a set period, and a latch circuit 54. With such a configuration, when the time set at the timer 53 comes, the effective data amount obtained through totalization by the totalizer 51 is latched by the latch circuit 54.

Then, the value latched in the manner explained above is reported to the request producing circuit 31 as transfer rate information. From a table referring to this information, the request producing circuit 31 determines the payload size.

A method of adjusting the payload size based on a memory read operation is explained. A command issued from the request producing circuit 31 of the data transfer master 3 of the device A is transmitted to the PCIe core 2 of the device A. The PCIe core 2 of the device A performs data transfer with the PCIe core 2 of the device B according to a PCI Express communication protocol. The device B transmits the read request command received at the PCIe core 2 to the data transfer slave 4. The data transfer slave 4 of the device B receiving the read request returns read data according to the request from the read-data transmitting circuit 43 to the PCIe core 2 of the device B. The PCIe core 2 of the device B performs data transfer with the PCIe core 2 of the device A according to the PCI Express communication protocol. The device A transmits the data received at the PCIe core 2 to the read-data receiving circuit 33 of the data transfer master 3, thereby completing transfer. Read data transfer from the data transfer master 3 of the device B is performed similarly.

Each data transfer master 3 observes the state of the read-data receiving circuit 33 to measure the transfer rate, and then transmits its information to the request producing circuit 31. Based on the transfer rate information, the request producing circuit 31 adjusts the payload size.

A method of adjusting the payload size at the request producing circuit 31 is explained. For example, it is assumed as depicted in Fig. 18 that a traffic 1 of memory write occurs from a device A to a device B and a traffic 2 of memory write occurs from the device B to the device A. Consider the case where the payload of the traffic 1 is relatively large and the payload of the traffic 2 is relatively small.

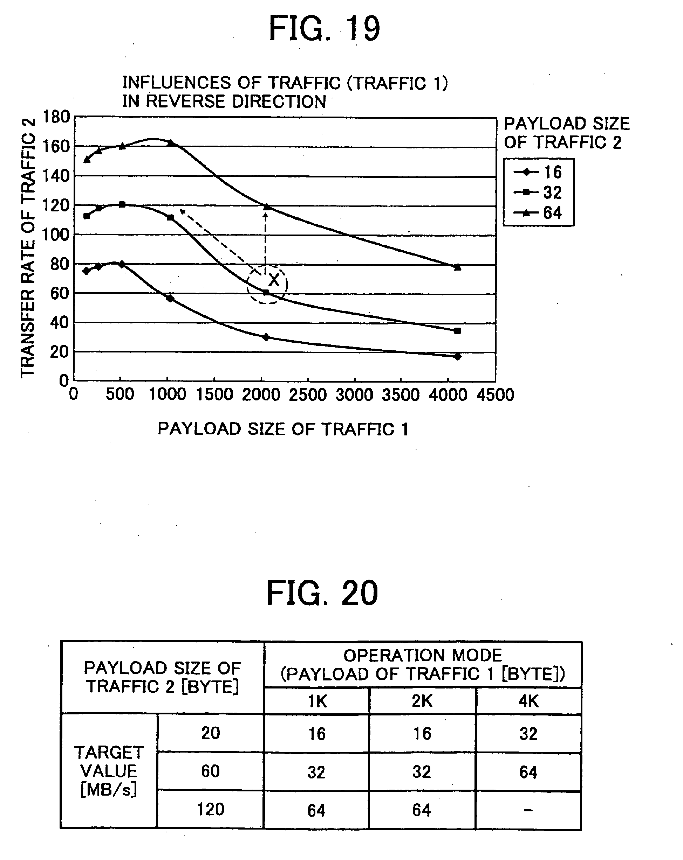

Fig. 19 depicts one example of characteristics in the case of Fig. 18. The horizontal axis in Fig. 19 represents payload sizes of the traffic 1 from 128 bytes to 4 kilobytes. The vertical axis in Fig. 19 represents transfer rates when the payload size of the traffic 2 is 16 bytes, 32 bytes, and 64 bytes.

Noting the conditions of a point X in Fig. 19, for example, when the transfer rate of the traffic 2 is equal to or greater than 100 as a target value, the desired traffic rate can be ensured through the following adjustment: Set the payload size of the traffic 1 at 1 kilobyte; and Set the payload size of the traffic 2 at 64 bytes.

The adjustment of the payload size as explained above is performed when the operation mode of an information processing apparatus, such as a digital copier or an MFP, having mounted thereon the data communication device 1 is switched.

As different operation modes, consider a case with different payload sizes of the traffic 1 in Fig. 18 and a case with different target values of the transfer rate of the traffic 2. A table in Fig. 20 represents payload sizes of the traffic 2 in different operation modes where the payload of the traffic 1 is 1 kilobyte, 2 kilobytes, and 4 kilobytes and the target value of the traffic 2 is 20 megabytes per second, 60 megabytes per second, and 120 megabytes per second. As evident from this table, different operation modes have different optimum values of the payload size of the traffic 2. By using this table, the payload size of the traffic 2 is optimized according to the operation mode.

In this manner, according to the present embodiment, a transfer rate of each traffic present between data communication devices connected via a high-speed serial bus is measured, and a parameter associated with data transfer in each traffic (for example, a packet size) is adjusted so that the measured transfer rate of each traffic has a preset target value. With this mechanism, even when a high-speed serial bus is applied to a data communication device having complex operation modes (for example, image equipment), a parameter associated with data transfer can be optimized. Also, transfer capabilities can be dynamically optimized, which is not possible at all in conventional information processing apparatuses and data communication devices (for example, image equipment).

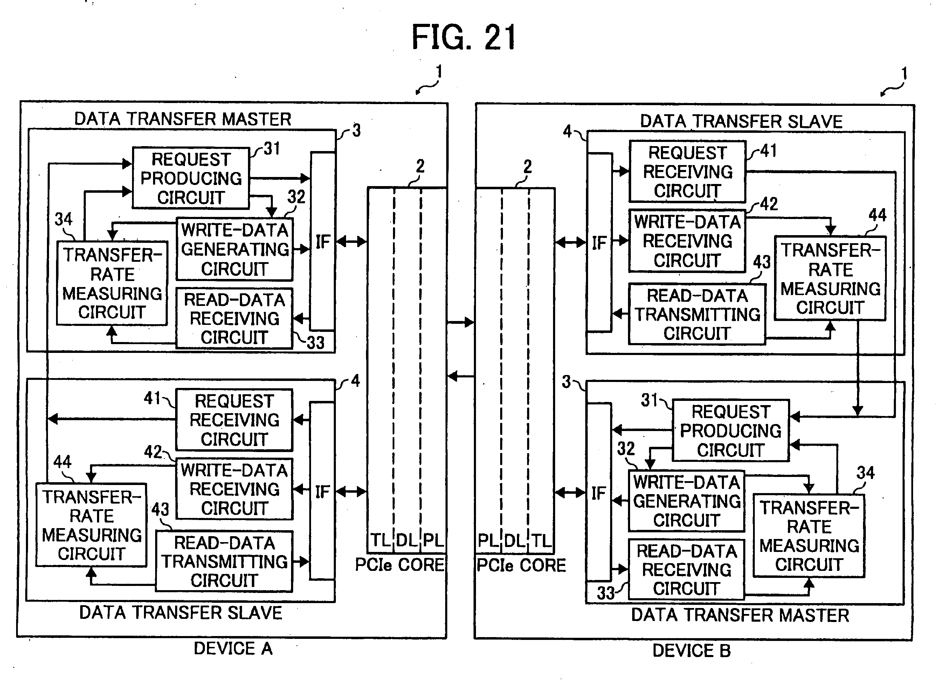

A second embodiment of the present invention is explained below based on Fig. 21. The same portions as those in the first embodiment are provided with the same reference numerals and are not explained herein.

Fig. 21 is a block diagram depicting the outline of the data communication device 1 according to the second embodiment of the present invention. As depicted in Fig. 21, the data communication device 1 according to the present embodiment is different from that in the first embodiment in that the data transfer slave 4 includes a transfer-rate measuring circuit 44, which is a transfer-rate measuring unit that observes a data amount of the write-data receiving circuit 42 and the read-data transmitting circuit 43 to measure a transfer rate.

A method of adjusting the payload size based on a memory write operation is explained. A command and data issued from the request producing circuit 31 and the write-data generating circuit 32 of the data transfer master 3 of the device A are transmitted to the PCIe core 2 of the device A. The PCIe core 2 of the device A performs data transfer with the PCIe core 2 of the device B through a PCI Express communication protocol. In the device B, the data received by the PCIe core 2 is transmitted to the data transfer slave 4, thereby completing transfer from the data transfer master 3 of the device A to the data transfer slave 4 of the device B. Data transfer from the device B to the device A is similarly performed.

Each data transfer slave 4 measures a transfer rate of write data, and reports this information to the request producing circuit 31 of the data transfer master 3 in the same device. The request producing circuit 31 receiving the transfer rate information generates a packet for reporting the transfer rate to the counterpart device. This information is transmitted via PCI Express to the request receiving circuit 41 of the data transfer slave 4 of the counterpart device. The data transfer slave 4 receiving the information reports the transfer rate information to the data transfer master 3 in its own device. Based on the transfer rate information, the request producing circuit 31 of the data transfer master 3 adjusts the payload size.

A method of adjusting the payload size based on a memory read operation is explained. A command issued from the request producing circuit 31 of the data transfer master 3 of the device A is transmitted to the PCIe core 2 of the device A. The PCIe core 2 of the device A performs data transfer with the PCIe core 2 of the device B according to a PCI Express communication protocol. The device B transmits the read request command received at the PCIe core 2 to the data transfer slave 4. The data transfer slave 4 of the device B receiving the read request returns read data according to the request from the read-data transmitting circuit 43 to the PCIe core 2 of the device B. The PCIe core 2 of the device B performs data transfer with the PCIe core 2 of the device A according to the PCI Express communication protocol. The device A transmits the data received at the PCIe core 2 to the read-data receiving circuit 33 of the data transfer master 3, thereby completing transfer. Read data transfer from the data transfer master 3 of the device B is performed similarly.

Each data transfer slave 4 measures a transfer rate of read data, and reports this information to the request producing circuit 31 of the data transfer master 3 in the same device. The request producing circuit 31 receiving the transfer rate information generates a packet for reporting the transfer rate to the counterpart device. This information is transmitted via PCI Express to the request receiving circuit 41 of the data transfer slave 4 of the counterpart device. The data transfer slave 4 receiving the information reports the transfer rate information to the data transfer master 3 in its own device. Based on the transfer rate information, the request producing circuit 31 of the data transfer master 3 adjusts the payload size.

In this manner, according to the present embodiment, a transfer rate of each traffic present between data communication devices connected via a high-speed serial bus is measured, and a parameter associated with data transfer in each traffic (for example, a packet size) is adjusted so that the measured transfer rate of each traffic has a preset target value. With this mechanism, even when a high-speed serial bus is applied to a data communication device having complex operation modes (for example, image equipment), a parameter associated with data transfer can be optimized. Also, transfer capabilities can be dynamically optimized, which is not possible at all in conventional information processing apparatuses and data communication devices (for example, image equipment).

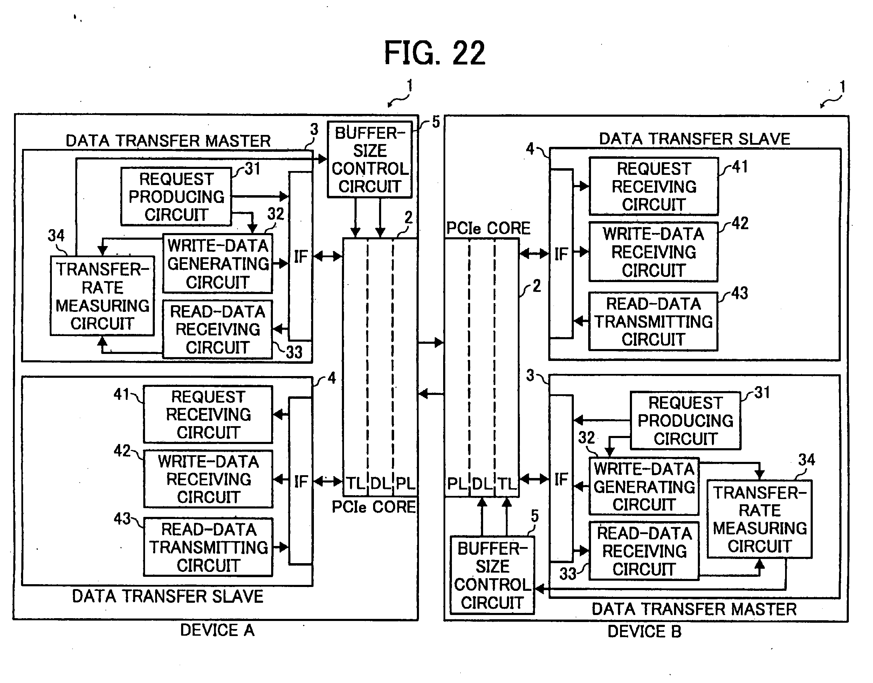

A third embodiment of the present invention is explained below based on Figs. 22 to 27. The same portions as those in the first embodiment are provided with the same reference numerals and are not explained herein.

Fig. 22 is a block diagram depicting the outline of the data communication device 1 according to the third embodiment of the present invention. As depicted in Fig. 22, the data communication device 1 according to the present embodiment is different from that in the first embodiment in that a buffer-size control circuit 5 is provided, which is a parameter adjusting unit that adjusts a buffer size based on transfer rate information.

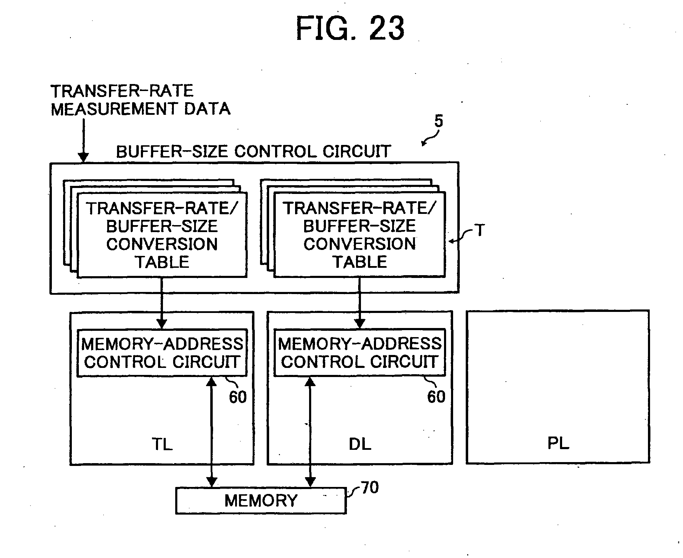

The buffer-size control circuit 5 has, as depicted in Fig. 23, a plurality of transfer-rate/buffer-size conversion tables T according to the measured transfer rates. In more detail, the buffer-size control circuit 5 has transfer-rate/buffer-size conversion tables T for buffering the transaction layer and transfer-rate/buffer-size conversion tables T for buffering the link layer. Such transfer rate/buffer size conversion tables T are tables for determining a buffer size appropriate to a desired transfer rate.

That is, the buffer-size control circuit 5 selects an appropriate table from the transfer-rate/buffer-size conversion tables T according to the transfer-rate measurement data.

Then, according to the buffer size determined by the buffer-size control circuit 5, the memory size of a desired memory 70 is adjusted in each buffer-memory address control circuit 60 inside the transaction layer and the link layer.

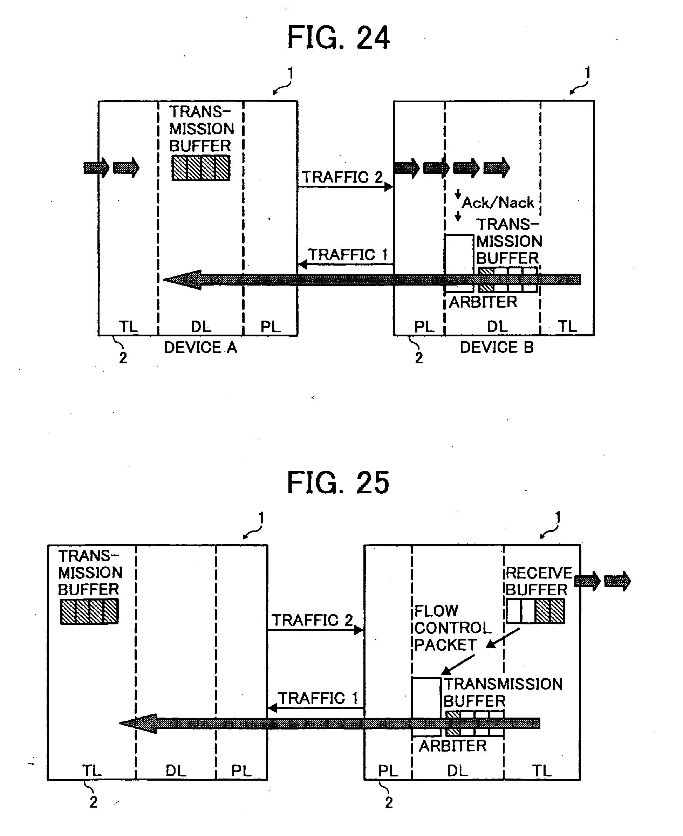

Fig. 24 is a schematic drawing of one example where the transfer rate of a traffic is degraded. Fig. 24 depicts a case where, in the information processing apparatus, such as a digital copier or MFP, a traffic 1 with an extremely large payload size (for example, a large amount of still image data) and a traffic 2 with a small payload size (for example, moving image data for operation panel) are transferred. In this case, with the influence of the traffic 1 with an extremely large payload size, the traffic 2 with a small payload size stops in midstream, thereby causing display unevenness, such as a lost frame. In more detail, in the PCI Express, when the device B receives the traffic 2 with a small payload size from the device A, Ack is returned to the device A, thereby releasing the transmission buffer of the data link layer of the device A. On the other hand, if retransmission is required, Nack is returned to the device A, and the traffic 2 with a small payload size is normally received again from the transmission buffer. With this, data transfer is ensured. That is, if there is a conflict between the traffic 1 with an extremely large payload size and the traffic 2 with a small payload size, an Ack/Nack packet cannot be transmitted during transmission of the traffic 1 with an extremely large payload size, thereby degrading the transfer rate of the traffic.

Fig. 25 is a schematic drawing of another example where the transfer rate of a traffic is degraded. Fig. 25 depicts a case where, in the information processing apparatus, such as a digital copier or MFP, a traffic 1 with an extremely large payload size (for example, a large amount of still image data) and a traffic 2 with a small payload size (for example, moving image data for operation panel) are transferred. In this case, with the influence of the traffic 1 with an extremely large payload size, the traffic 2 with a small payload size stops in midstream, thereby causing display unevenness, such as a lost frame. In more detail, in the PCI Express, in order for the device B to transmit the traffic 2 with a small payload size from the device A, a credit indicating information of vacancy of the buffer of the transaction layer of the device B has to be reported to the device A. This is reported when appropriate through a flow control packet. Reporting has to be performed more frequently as the buffer of the transaction layer is smaller. That is, if there is a conflict between the traffic 1 with an extremely large payload size and the traffic 2 with a small payload size, the flow control packet cannot be transmitted during transmission of the traffic 1 with an extremely large payload size, thereby degrading the transfer rate of the traffic.

A method of adjusting the buffer size based on a memory write operation is explained. A command and data issued from the request producing circuit 31 and the write-data generating circuit 32 of the data transfer master 3 of the device A are transmitted to the PCIe core 2 of the device A. The PCIe core 2 of the device A performs data transfer with the PCIe core 2 of the device B through a PCI Express communication protocol. In the device B, the data received by the PCIe core 2 is transmitted to the data transfer slave 4, thereby completing transfer from the data transfer master 3 of the device A to the data transfer slave 4 of the device B. Data transfer from the device B to the device A is similarly performed.

Each data transfer master 3 observes the state of the write-data generating circuit 32 to measure the transfer rate of write data, and then transmits its information to the buffer-size control circuit 5. The buffer-size control circuit 5 adjusts the buffer size based on the transfer rate information.

Next, a method of adjusting the buffer size based on a memory read operation is explained. A command issued from the request producing circuit 31 of the data transfer master 3 of the device A is transmitted to the PCIe core 2 of the device A. The PCIe core 2 of the device A performs data transfer with the PCIe core 2 of the device B according to a PCI Express communication protocol. The device B transmits the read request command received at the PCIe core 2 to the data transfer slave 4. The data transfer slave 4 of the device B receiving the read request returns read data according to the request from the read-data transmitting circuit 43 to the PCIe core 2 of the device B. The PCIe core 2 of the device B performs data transfer with the PCIe core 2 of the device A according to the PCI Express communication protocol. The device A transmits the data received at the PCIe core 2 to the read-data receiving circuit 33 of the data transfer master 3, thereby completing transfer. Read data transfer from the data transfer master 3 of the device B is performed similarly.

Each data transfer master 3 observes the state of the read-data receiving circuit 33 to measure the transfer rate, and then transmits its information to the buffer-size control circuit 5. Based on the transfer rate information, the buffer-size control circuit 5 adjusts the buffer size.

Next, a method of adjusting the buffer size at the buffer-size control circuit 5 is explained. For example, it is assumed as depicted in Fig. 24 that a traffic 2 with a small payload size (for example, moving image data for operation panel) occurs from a device A to a device B and a traffic 1 with an extremely large payload size (for example, a large amount of still image data) occurs from the device B to the device A.

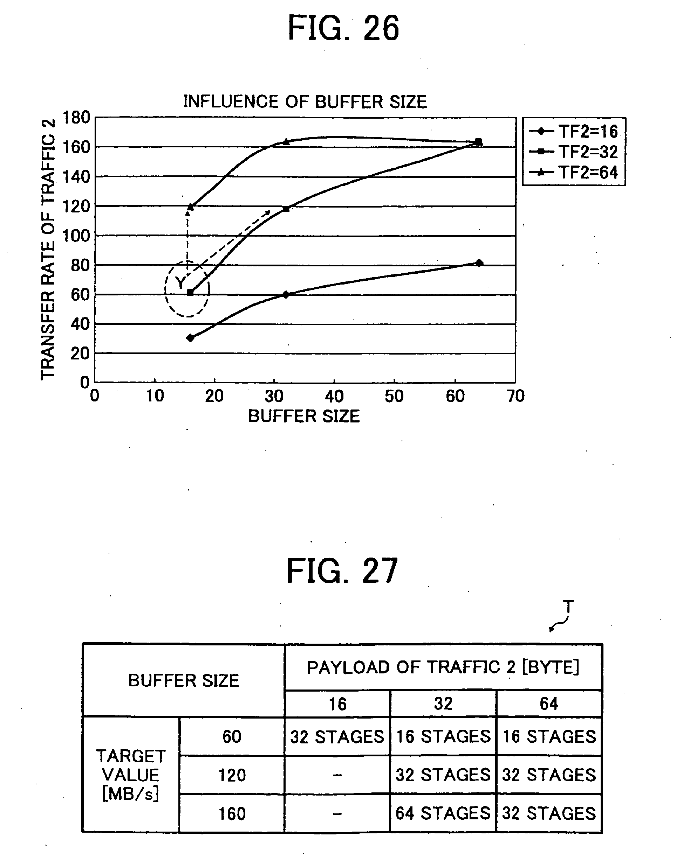

Fig. 26 depicts one example of characteristics in the case depicted in Fig. 24. The horizontal axis in Fig. 26 represents buffer sizes. The vertical axis in Fig. 26 represents transfer rates when the payload size of the traffic 2 is 16 bytes, 32 bytes, and 64 bytes.

Here, note the conditions of a point Y in Fig. 26. For example, when the transfer rate of the traffic 2 is equal to or greater than 100 as a target value, the desired traffic rate can be ensured through the following adjustment: Set the buffer size at 30; and Set the payload size of the traffic 2 at 64 bytes.

The adjustment of the buffer size as explained above is performed when the operation mode of an information processing apparatus, such as a digital copier or an MFP, having mounted thereon the data communication device 1 is switched.

Here, as different operation modes, consider a case with different payload sizes and different target values of the transfer rate of the traffic 2 in Fig. 24. A transfer-rate/buffer-size conversion table T in Fig. 27 represents buffer sizes in different operation modes where the payload of the traffic 2 is 16 bytes, 32 bytes, and 64 bytes and the target value of the traffic 2 is 60 megabytes per second, 120 megabytes per second, and 160 megabytes per second. As evident from this table, different operation modes have different optimum values of the buffer size. By using this table, the buffer size is optimized according to the operation mode. Here, although not depicted herein, if there is a change in operation mode causing a change in the condition of the traffic 1, another table can be provided.

In this manner, according to the present embodiment, a transfer rate of each traffic present between data communication devices connected via a high-speed serial bus is measured, and a parameter associated with data transfer in each traffic (for example, a packet size) is adjusted so that the measured transfer rate of each traffic has a preset target value. With this mechanism, even when a high-speed serial bus is applied to a data communication device having complex operation modes (for example, image equipment), a parameter associated with data transfer can be optimized. Also, transfer capabilities can be dynamically optimized, which is not possible at all in conventional information processing apparatuses and data communication devices (for example, image equipment).

As described above, according to one aspect of the present invention, a traffic rate of each traffic present between data communication devices connected via a high-speed serial bus is measured, and a parameter associated with data transfer in each traffic (for example, a packet size or buffer size) is adjusted so that the measured transfer rate of each traffic has a preset target value. With this mechanism, even when a high-speed serial bus is applied to a data communication device with complex operation modes (for example, image equipment), a parameter associated with data transfer can be optimized. Also, transfer capabilities can be dynamically optimized, which is not possible at all in conventional information processing apparatuses and data communication devices (for example, image equipment).

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An information processing apparatus comprising:
a first data communication device (1, A); and
a second data communication device (1, B) interconnectable with the first data communication device (1, A) via a serial bus,
wherein the first data communication device (1, A) includes:
a transfer-rate measuring unit (34) that measures a transfer rate of at least one of a plurality of traffics including a first traffic from the first data communication device (1, A) to the second data communication device (1, B) and a second traffic from the second data communication device (1, B) to the first data communication device (1, A); and
a parameter adjusting unit (31) that:
adjusts a payload size of data transferred over the first traffic based on a transfer-rate of the second traffic measured by the transfer-rate measuring unit (34) such that the transfer rate of the first traffic becomes a first preset target value, or
adjusts a payload size of data transferred over the second traffic based on a transfer-rate of the first traffic measured by the transfer-rate
measuring unit (34) such that the transfer rate of the second traffic becomes a second preset target value.

2. An information processing apparatus according to claim 1, wherein the parameter adjusting unit (31) adjusts the parameter by decreasing a payload size of data transferred over the first traffic when the payload size is larger than a payload size of data transferred over the second traffic.

3. An information processing apparatus according to claim 1, wherein the parameter adjusting unit (31) adjusts the parameter by increasing a payload size of data transferred over the first traffic when the payload size is smaller than a payload size of data transferred over the second traffic.

4. An information processing apparatus according to claim 1, wherein the parameter adjusting unit (31) adjusts a size of a transmission buffer in which data transferred over the first traffic is temporarily stored.

5. An information processing apparatus according to any one of claims 1 to 4, wherein the parameter adjusting unit (31) adjusts the parameter when an operation mode is switched.

## Patentansprüche

1. Vorrichtung zur Informationsverarbeitung, umfassend:
ein erstes Datenkommunikationsgerät (1, A); und
ein zweites Datenkommunikationsgerät (1, B), das mit dem ersten Datenkommunikationsgerät (1, A) über einen seriellen Bus verbunden werden kann;
wobei das erste Datenkommunikationsgerät (1, A) enthält:
eine Übertragungsratenmesseinheit (34), die eine Übertragungsrate von zumindest einem einer Mehrzahl von Datenverkehren misst, umfassend einen ersten Datenverkehr vom ersten Datenkommunikationsgerät (1, A) zum zweiten Datenkommunikationsgerät (1, B) und einen zweiten Verkehr vom zweiten Datenkommunikationsgerät (1, B) zum ersten Datenkommunikationsgerät (1, A); und
eine Parametereinstelleinheit (31), die:
ein Nutzdatengröße von Daten einstellt, die über den ersten Verkehr übertragen werden, auf Basis einer Übertragungsrate des zweiten Verkehrs, die von der Übertragungsratenmesseinheit (34) gemessen wird, so dass die Übertragungsrate des ersten Verkehrs ein erster vorab festgelegter Zielwert wird, oder
eine Nutzdatengroße von Daten einstellt, die über den zweiten Verkehr übertragen werden, auf Basis einer Übertragungsrate des ersten Verkehrs, die von der Übertragungsratenmesseinheit (34) gemessen wird, so dass die Übertragungsrate des zweiten Verkehrs ein zweiter vorab festgelegter Zielwert wird.

2. Vorrichtung zur Informationsverarbeitung nach Anspruch 1, wobei die Parametereinstellvorrichtng (31) den Parameter einstellt, indem eine Nutzdatengröße von Daten, die über den ersten Verkehr übertragen werden, gesenkt wird, wenn die Nutzdatengröße größer als eine Nutzdatengröße von Daten ist, die über den zweiten Verkehr übertragen werden.

3. Vorrichtung zur Informationsverarbeitung nach Anspruch 1, wobei die Parametereinstellvorrichtng (31) den Parameter einstellt, indem eine Nutzdatengröße von Daten, die über den ersten Verkehr übertragen werden, erhöht wird, wenn die Nutzdatengröße kleiner als eine Nutzdatengröße von Daten ist, die über den zweiten Verkehr übertragen werden.

4. Vorrichtung zur Informationsverarbeitung nach Anspruch 1, wobei die Parametereinstelleinheit (31) eine Größe eines Übertragungspuffers einstellt, in dem Daten, die über den ersten Verkehr übertragen werden, vorübergehend gespeichert werden.

5. Vorrichtung zur Informationsverarbeitung nach einem der Ansprüche 1 bis 4, wobei die Parametereinstelleinheit (31) den Parameter einstellt, wenn ein Betriebsmodus geschaltet wird.

## Revendications

1. Appareil de traitement d'informations comprenant :
un premier dispositif de communication de données (1, A) ; et
un second dispositif de communication de données (1, B) interconnectable avec le premier dispositif de communication de données (1, A) par le biais d'un bus série,
dans lequel le premier dispositif de communication de données (1, A) comprend :
une unité de mesure de débit de transfert (34) qui mesure un débit de transfert d'au moins l'un d'une pluralité de trafics comprenant un premier trafic du premier dispositif de communication de données (1, A) vers le second dispositif de communication de données (1, B) et un second trafic du second dispositif de communication de données (1, B) vers le premier dispositif de communication de données (1, A) ; et
une unité de réglage de paramètre (31) qui :
règle une taille de données utiles de données transférées sur le premier trafic sur la base d'un débit de transfert du second trafic mesuré par l'unité de mesure de débit de transfert (34) de telle sorte que le débit de transfert du premier trafic devient une première valeur cible prédéfinie, ou
règle une taille de données utiles de données transférées sur le second trafic sur la base d'un débit de transfert du premier trafic mesuré par l'unité de mesure de débit de transfert (34) de telle sorte que le débit de transfert du second trafic devient une seconde valeur cible prédéfinie.

2. Appareil de traitement d'informations selon la revendication 1, dans lequel l'unité de réglage de paramètre (31) règle le paramètre en réduisant une taille des données utiles de données transférées sur le premier trafic lorsque la taille des données utiles est supérieure à une taille des données utiles de données transférées sur le second trafic.

3. Appareil de traitement d'informations selon la revendication 1, dans lequel l'unité de réglage de paramètre (31) règle le paramètre en augmentant une taille des données utiles de données transférées sur le premier trafic lorsque la taille des données utiles est inférieure à une taille des données utiles de données transférées sur le second trafic.

4. Appareil de traitement d'informations selon la revendication 1, dans lequel l'unité de réglage de paramètre (31) règle une taille d'un tampon d'émission dans lequel les données transférées sur le premier trafic sont stockées temporairement.

5. Appareil de traitement d'informations selon l'une quelconque des revendications 1 à 4, dans lequel l'unité de réglage de paramètre (31) règle le paramètre lorsqu'un mode opérationnel est commuté.
